# EUROPEAN PATENT APPLICATION

(11) **EP 3 466 577 A1**
(43) Date of publication of application: **10.04.2019**
(21) Application number: 18196342.2
(22) Date of filing: 24.09.2018
(51) Int. Cl.: B23C 3/35

(54) **KEY CUTTING APPARATUS**

(30) Priority: 05.10.2017 GB 201716306
(71) Applicant: Iconx Limited, Brighton, East Sussex BN1 1AX (GB)
(72) Inventor: Horsfall, David Anthony, Brighton, East Sussex BN1 1AX (GB); Crowther, Polly, Brighton, East Sussex BN1 1AX (GB)
(74) Representative: Sales, Robert Reginald

(57) **Abstract**

Key cutting apparatus (10) for cutting a new key to replicate an existing key. The apparatus (10) comprising a reading station (14) determining the type of key blank to be cut and the required shape for the blank to be cut to. A plurality of magazines (26) for retaining a supply of a number of different types of key blanks are provided. A key cutting station (44) is provided for cutting a new key from a blank in response to the measured shape of the existing key. A carrying arrangement (36) is provided to fetch a required key blank from a respective magazine (26) and take the required key blank to the key cutting station (44).

## Description

This invention concerns key cutting apparatus.

A number of key cutting machines are currently available. In the European market at least there are a significant number of different types of key blanks, whether for cylinder or lever keys. In view of this it has generally only been possible to provide semi-automatic key cutting machines, where it is usually required to manually input the identity of, or the actual required blank to be cut.

According to a first aspect of the invention there is provided key cutting apparatus for cutting a new key to replicate an existing key, the apparatus comprising a reading station to read the shape of the existing key, the reading station determining the type of key blank to be cut and the required shape for the blank to be cut to, a blank storage arrangement for retaining a supply of a number of different types of key blanks, a key cutting station for cutting a new key from a blank in response to the measured shape of the existing key, and a carrying arrangement, the carrying arrangement being configured to fetch a required key blank from the blank storage arrangement, and take the required key blank to the key cutting station.

The apparatus may include an inlet for receiving an existing key to have the shape of the key read by the reading station.

The apparatus may include an outlet to deliver a new key to a customer, and the carrying arrangement may deliver the cut key from the key cutting station to the outlet.

The blank storage arrangement may include a plurality of magazines, with a respective magazine for each type of key blank.

The magazines may locate the key blanks in a stack one above each other. At least ten magazines may be provided, and preferably at least twenty five magazines may be provided.

A dispensing arrangement may be provided for each magazine to dispense key blanks therefrom, one at a time.

The dispensing arrangement may be configured to automatically dispense a key blank upon the carrying arrangement arriving at a respective magazine. The dispensing arrangement may include a projecting engagement member arranged such that as the carrying arrangement approaches a respective magazine the carrying arrangement engages against the engagement member to cause a key blank to be dispensed to the carrying arrangement.

The carrying arrangement may hold the blade of a dispensed key blank and deliver the key blank to the cutting apparatus such that the key blank is held in the cutting apparatus by the head of the key blank.

An embodiment of the present invention will now be described by way of example only and with reference to the accompanying drawings, in which:-
Fig. 1 is a diagrammatic part cut away front view of key cutting apparatus according to the invention;
Fig. 2 is a more detailed view of part of the apparatus of Fig. 1;
Fig. 3 is a diagrammatic front view with the front removed of the apparatus of Fig. 1;

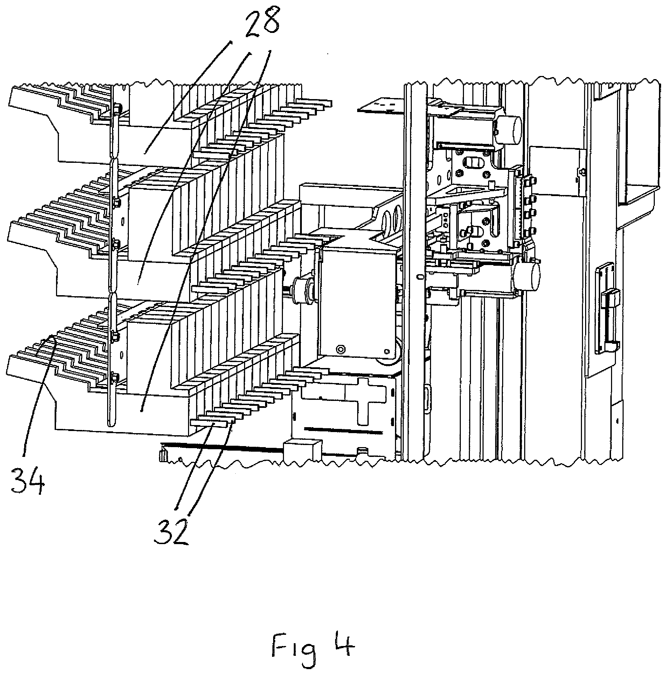

Fig. 4 is a diagrammatic perspective side view of an upper part of the apparatus of Fig. 1;

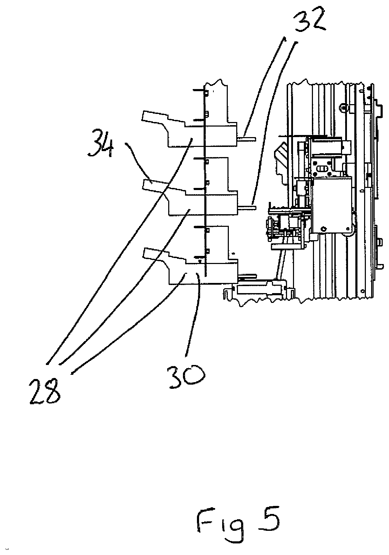

Fig. 5 is a diagrammatic side view of the upper part of the apparatus of Fig. 1;
Fig. 6 is a diagrammatic perspective view of an arrangement of the apparatus of Fig. 1;
Fig. 7 is a diagrammatic perspective view from beneath of part of the arrangement of Fig. 6;
Fig. 8 is a diagrammatic perspective view of part of the apparatus of Fig. 1 in use;
Fig. 9 is a further diagrammatic perspective view of part of the apparatus of Fig. 1 in use;
Fig. 10 is a diagrammatic side view of part of the apparatus of Fig. 1;
Fig. 11 is a cross-sectional view along the line A-A of Fig. 10;
Fig. 12 is a further diagrammatic front view of the arrangement of Fig. 6;
Fig. 13 is a diagrammatic rear perspective view of the arrangement of Fig. 12;
Fig. 14 is a detailed view of part of Fig. 13; and
Fig. 15 is a diagrammatic perspective view from above of part of the arrangement of Fig. 6

The drawings show a key cutting apparatus 10 for cutting a new key to replicate an existing key so as to provide a duplicate copy or copies of an existing key.

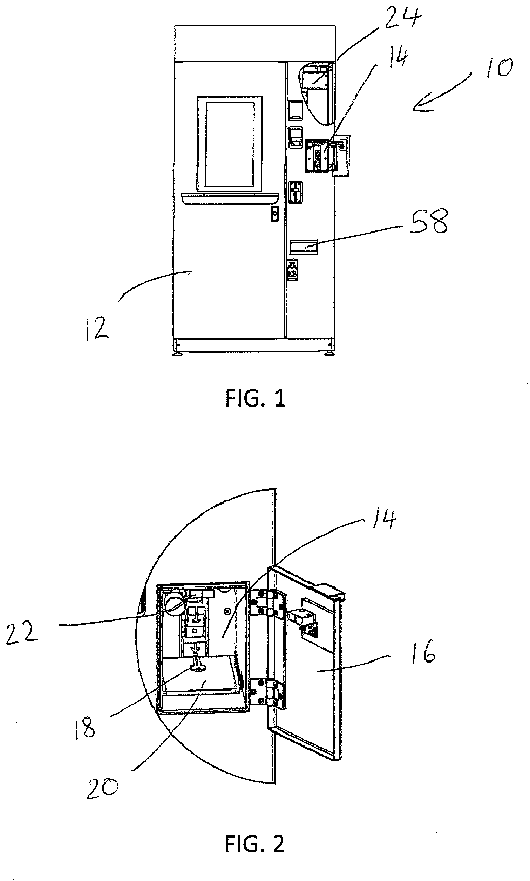

The apparatus 10 comprises a cabinet 12 which could be located for instance in a supermarket, street, railway or bus station or other appropriate location. The cabinet 12 includes a chamber 14 with an openable door 16 which can receive a key 18 to be copied as illustrated in Fig. 2. As can be seen the key 18 can be located on a glass plate 20 in the chamber 14, and once the door 16 is closed as detected by a sensor 22, the profile of the key 18 can be detected by a scanning camera 24 as shown in Fig. 1. The camera 24 determines the shape of the key 18 to be cut, and also the appropriate key blank type to be used to produce the copied key.

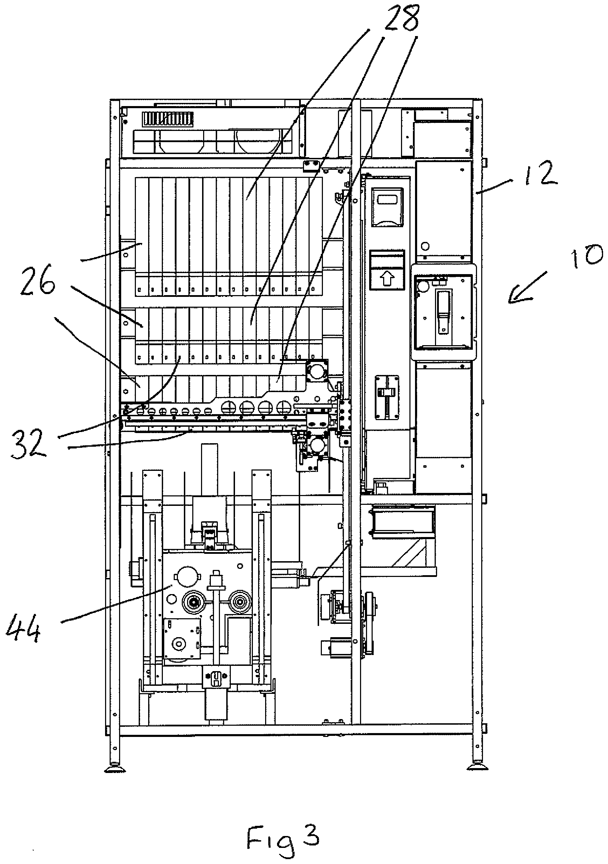

The apparatus 10 includes a plurality of magazines 26, as shown in Fig. 3. Three rows 28 of magazines 26 are provided. In this instance there are a total of forty two magazines, but any required appropriate number may be provided. It can be noted that the upper row 28 of magazines 26 are larger and would thus carry the more commonly used key blanks in greater numbers. Each magazine 26 has a blank dispensing arrangement 30 with a projecting engagement member 32 pointing forwards. The engagement member 32 is connected to a sprung connecting arrangement 34, such that if the engagement member 32 is pushed towards the respective magazine 26, the connecting arrangement 34 will cause a single key blank to be dispensed from the magazine 26.

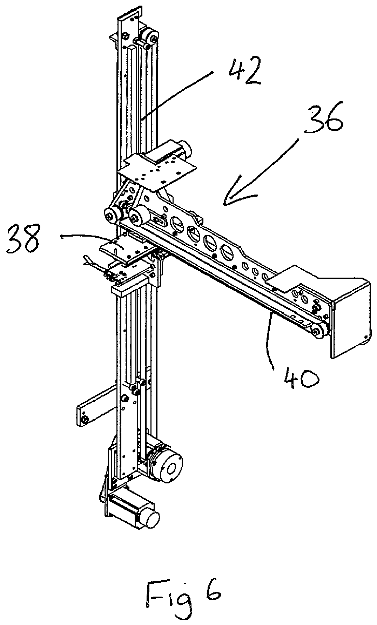

The apparatus 10 includes a carrying arrangement 36 with a bracket 38 movable along a horizontal track 40, which horizontal track 40 is movable along a vertical track 42, as illustrated for instance in Fig. 6. A track 39 extending perpendicularly to the horizontal and vertical tracks 40, 42, is provided on the bracket 38. A head 41 is movably mounted on the track 39 so as to be movable towards or away from the magazines 26.

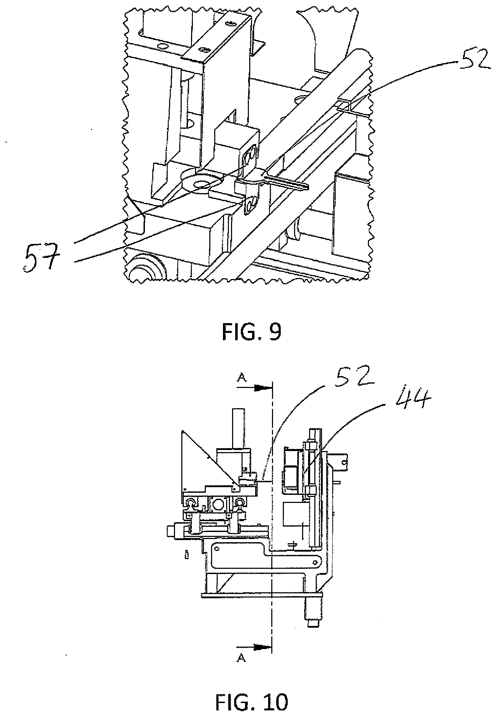

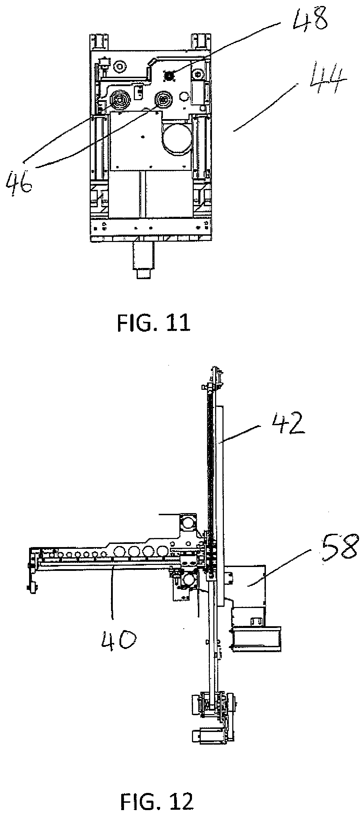

The apparatus 10 also includes a key cutting station 44 as shown for instance in Figs. 9 to 11 which includes a pair of cutting wheels 46 and a deburring wheel 48. An outlet 58 is provided for receiving a cut key to be delivered to a user of the apparatus 10.

In use a key 18 to be copied is located in the cabinet 12 and an image taken of the key 18. The apparatus 10 will also determine the most appropriate key blank type to use in replicating this key 18, and identify the magazine 26 holding appropriate key blanks. As the head 41 approaches the respective magazine 26 it will engage with the respective projecting engagement member 32. This will cause a key blank 52 to be dispensed which will be held by the head 41 such that the blade of a dispensed key blank 52 is held.

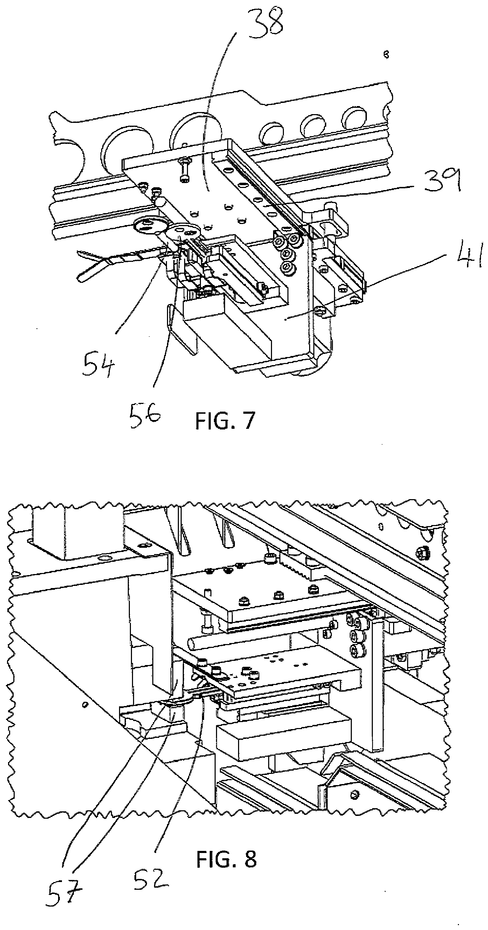

Fig. 7 diagrammatically shows both lever 54 and cylinder keys blanks 56 being held by the head 41, though in practice only one key blank 52 will be carried at any one time. The key blank 52 will be delivered to the key cutting station 44 where the blank 52 will be held by the head of the blank 52 by two jaws 57, as shown in Figs. 8 and 9.

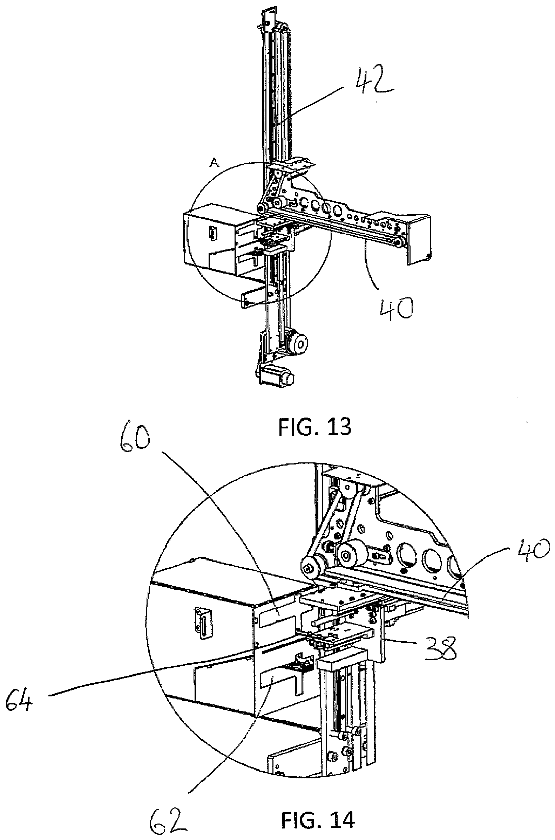

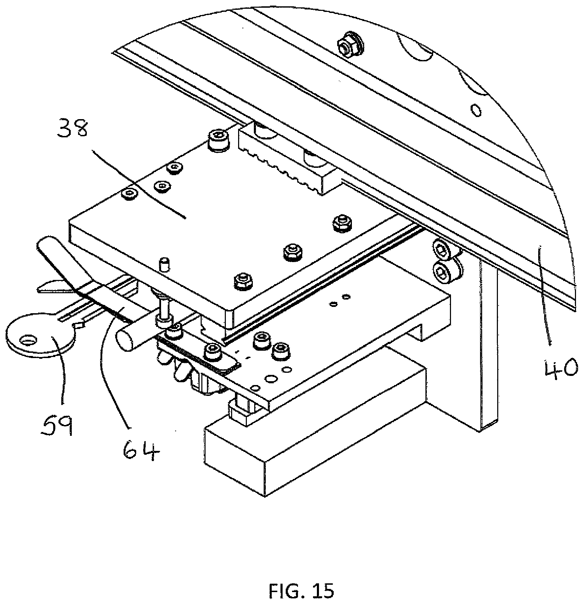

Once the key blank cutting operation has been completed and the blank 52 de-burred, the carrying arrangement 36 will take the cut key 59 and deliver it to an outlet 58 in the cabinet 12, as shown in Figs. 13 and 14. Figs. 13 and 14 show an upper slot 60 where cut keys are posted through. A lower slot 62 is provided where any reject keys can be posted for later removal. The cut key 59 is carried by a spring clip 64 on the head 41, as shown in Fig. 15. The profile of the slots 60, 62 enables the cut key 59 to be pulled off the spring clip 64.

There is thus described a key cutting apparatus which provides for automatic copying of a key. Following reading of a key shape and type, an appropriate key blank type is automatically chosen, cut and delivered to an outlet. The apparatus permits a wide range of different key blanks to be stored and hence a wide range of different keys to be copied.

Various modifications may be made without departing from the scope of the invention. The cabinet may be differently arranged, and may not include a frame, or at least a frame of the type shown. A different arrangement of magazines or types of magazines can be used. The carrying arrangement may take a different form and could carry the blanks differently. A different key cutting arrangement could be used.

As indicated a different number of magazines may be provided, and these may be arranged differently, as required. The magazines may hold the blanks in a different manner. A different scanning camera arrangement could be used.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Key cutting apparatus for cutting a new key to replicate an existing key, the apparatus comprising a reading station to read the shape of the existing key, the reading station determining the type of key blank to be cut and the required shape for the blank to be cut to, a blank storage arrangement for retaining a supply of a number of different types of key blanks, the blank storage arrangement including a plurality of magazines, with a respective magazine for each type of key blank, a dispensing arrangement for each magazine to dispense key blanks therefrom, one at a time, a key cutting station for cutting a new key from a blank in response to the measured shape of the existing key, and a carrying arrangement, the carrying arrangement being configured to fetch a required key blank from the blank storage arrangement, and take the required key blank to the key cutting station, each dispensing arrangement being configured to automatically dispense a key blank upon the carrying arrangement arriving at a respective magazine.

2. Key cutting apparatus according to claim 1, in which the apparatus includes an inlet for receiving an existing key to have the shape of the key read by the reading station.

3. Key cutting apparatus according to claims 1 or 2, in which the apparatus includes an outlet to deliver a new key to a customer.

4. Key cutting apparatus according to claim 3, in which the carrying arrangement delivers the cut key from the key cutting station to the outlet.

5. Key cutting apparatus according to any of the preceding claims, in which the magazines locate the key blanks in a stack one above each other.

6. Key cutting apparatus according to any of the preceding claims, in which at least ten magazines are provided.

7. Key cutting apparatus according to claim 6, in which at least twenty five magazines are provided.

8. Key cutting apparatus according to any of the preceding claims, in which each dispensing arrangement includes a projecting engagement member arranged such that as the carrying arrangement approaches a respective magazine the carrying arrangement engages against the engagement member to cause a key blank to be dispensed to the carrying arrangement.

9. Key cutting apparatus according to any of the preceding claims, in which the carrying arrangement holds the blade of a dispensed key blank and delivers the key blank to the key cutting station such that the key blank is held in the key cutting station by the head of the key blank.

10. Any novel subject matter or combination including novel subject matter disclosed herein, whether or not within the scope of or relating to the same invention as any of the preceding claims.
